# EUROPEAN PATENT APPLICATION

(11) **EP 2 985 745 A1**
(43) Date of publication of application: **17.02.2016**
(21) Application number: 14180830.3
(22) Date of filing: 13.08.2014
(51) Int. Cl.: G08G 1/14, G08G 1/00

(54) **Method and system for supporting delivery efficiency of delivered services to vehicles**

(71) Applicant: Volvo Car Corporation, 40531 Göteborg (SE)
(72) Inventor: Davidsson, Staffan, 42668 Västra Frölunda (SE); Maresch, Johan, 41125 GÖTEBORG (SE)
(74) Representative: Kraenzmer, Martin

(57) **Abstract**

The present disclosure relates to a method performed by a parking assigning system (2) for supporting delivery efficiency of delivered services to vehicles (1) adapted for receipt of delivered services. The parking assigning system determines (2002) first vehicle condition data associated with a first vehicle (11) adapted for receipt of a delivered service. The parking assigning system further determines (2004) at least a first suitable parking location (3) based on the first vehicle condition data. Moreover, the parking assigning system provides (2005) assigned parking information (231) comprising the at least first suitable parking location to a vehicle user device (111) associated with the first vehicle.

The disclosure also relates to a parking assigning system in accordance with the foregoing.

## Description

### TECHNICAL FIELD

The present disclosure relates to a parking assigning system and a method performed therein for supporting delivery efficiency of delivered services to vehicles adapted for receipt of delivered services.

### BACKGROUND

In recent years, an increasing activity of shopping over the Internet has, among other reasons, led to a desire for alternative, refined package delivery points for consumers. Instead of having to pay a visit to a post office, or stay at home in order to receive a package delivery, a recipient of a package may be given the opportunity to have said package delivered to, for instance, a self-service package delivery service such as e.g. a pick-up locker. In order to retrieve the package, the locker may be opened with a pick-up code unique to the recipient.

For even greater convenience, the recipient of a package may nowadays even be able to choose to have said package delivered directly to his or her parked, unattended vehicle. Giving the delivery service temporary access to the vehicle, for instance via diagnostic and/or connectivity technology, to deposit a package, the vehicle may act as a "smart locker" for package drop-off. One such known solution enables a subscriber of delivery services to have installed a tracking unit in his or her vehicle to thereby track the subscriber's daily parking routines. The tracking unit may ping the GPS coordinates of the subscriber's vehicle when it has not moved for, for instance, 15 minutes. Based on these data, a "heat map" may be created of the exact locations where the subscriber's vehicle is mostly parked. Based on the daily and weekly routine of the vehicle, it may be predicted ahead when a package may suitably be delivered. The subscriber may track both the package and the location and status of his or her vehicle. If at the last moment the vehicle is moved, it may be suggested that the delivery is aborted and a new delivery planned. Although the known solution discussed in the foregoing enables convenient package delivery by means of the recipient's vehicle acting as a package drop-off point, the suggested approach implicates a rather complex solution of tracking one or a plurality of vehicles adapted for receipt of a package delivery.

### SUMMARY OF THE INVENTION

It is therefore an object of embodiments herein to provide an approach supporting delivery efficiency of delivered services to vehicles.

According to a first aspect of embodiments herein, the object is achieved by a method performed by a parking assigning system for supporting delivery efficiency of delivered services to vehicles adapted for receipt of delivered services. The parking assigning system determines first vehicle condition data associated with a first vehicle adapted for receipt of a delivered service. The parking assigning system further determines at least a first suitable parking location based on the first vehicle condition data. Moreover, the parking assigning system provides assigned parking information comprising the at least first suitable parking location to a vehicle user device associated with the first vehicle.

Thereby, input comprising information of at least one parking proposal for the first vehicle, is submitted to the vehicle user device. That is, one or several preferred parking locations are provided to the user device, thus suggesting suitable parking locations for the first vehicle. Accordingly, by informing e.g. a user of the vehicle via the vehicle user device of the parking proposals, he or she may choose to position the first vehicle in accordance therewith. Subsequently, should the first vehicle be driven to and positioned at the at least first suitable parking location, the delivered service may be delivered in an efficient manner, in that the parking location rather than having been selected by the preferences of the user of the vehicle, has been selected based on criteria suitable for efficient delivery of delivered services.

For that reason, an approach is provided supporting delivery efficiency of delivered services to vehicles.

The technical features and corresponding advantages of the above mentioned method will be discussed in further detail in the following.

By introducing a method performed by a parking assigning system for supporting delivery efficiency of delivered services to vehicles adapted for receipt of delivered services, e.g. delivery efficiency of at least one delivered service to at least one vehicle adapted for receipt of a delivered service, an approach is provided which assists in planning for a more convenient, e.g. less time consuming, delivery to one or several vehicles awaiting delivered services. Such a vehicle may for instance refer to a car, truck, lorry, van or bus. The expression "vehicle adapted for receipt of a delivered service" is throughout this disclosure intended to at least refer to an arbitrary vehicle awaiting a delivered service, for instance by having placed an order for delivery of the delivered service over e.g. the Internet. A vehicle adapted for a delivered service may, for instance, in a known manner, be pre-configured to give temporary access to the vehicle, or e.g. to a trunk thereof, to a service provider, to be able to receive the delivered service. The vehicle may be unattended, for instance parked and locked, without the driver, owner, passenger or any arbitrary person accountable for the vehicle, being present.

Moreover, the expression "delivered service" which one or several vehicles may be adapted to receive, may vary from one vehicle to another, and may for instance relate to delivery of a product, such as e.g. a parcel, goods, dry cleaned clothes, food etc., or delivery of a service, such as e.g. a vehicle service, vehicle reconditioning or the like. Accordingly, a "service provider" is throughout this disclosure intended to refer to any arbitrary service entity and/or service person providing delivered services. That is, a "service provider" may at least refer to a service entity providing delivered services according to the foregoing, for instance a vehicle carrying deliveries such as a car, scooter, bicycle or van, or for instance a service vehicle carrying equipment necessary to service the vehicle destined therefore. A "service provider" may as a complement include an operator performing the delivered service, such as e.g. a delivery man, mechanic, or the like.

The "parking assigning system" may, for instance, be implemented on one or several servers, and may be adapted to communicate, e.g. wirelessly, with a service provider. Additionally, the parking assigning system may be adapted to communicate with the one or several vehicles adapted for receipt of delivered services. Such a communication may for instance take place via an intermediate system adapted to communicate with vehicles and to hold updated positions of the vehicles, for instance a management and/or assisting system such as e.g. Volvo On Call.

Since the parking assigning system determines, for instance by means of a condition determining unit, first vehicle condition data associated with a first vehicle adapted for receipt of a delivered service, delivery preferences of a first vehicle are established. That is, conditions derived from a placed order of a delivered service to said vehicle are determined, for instance giving an approximation of when and/or to what geographical region the delivered service approximately should, or may, be delivered. The "first vehicle condition data" may hence refer to delivery preferences and/or conditions associated with a placed order of a delivered service to the first vehicle. The "determining" is here intended to be interpreted in a broad manner, for instance likewise including establishing, receiving, retrieving, fetching and/or learning of.

Since the parking assigning system further determines, for instance by means of a parking determining unit, at least a first suitable parking location based on the first vehicle condition data, at least one preferred parking proposal is established in consideration of the first vehicle condition data. That is, by taking the conditions of the placed order of the delivered service to said vehicle into account, one or several parking locations considered convenient for delivery of the delivered service, may be determined. For instance, the at least first suitable parking location may, e.g. based on an approximate delivery region derived from the first vehicle condition data, be suggested to be close to a service provider of the delivered service within said region. Additionally or alternatively, the at least first suitable parking location may be suggested to be in a parking area comprised in said region, which parking area may be known to be easily accessible or known to be utilized by other vehicles adapted for receipt of delivered services. Since the at least first suitable parking location determined may depend on timing preferences of the first vehicle condition data, e.g. an approximate timing of delivery of the delivered service, the parking proposals may vary depending on e.g. time of day, day of the week and/or season.

The expression "suitable parking location" may refer to any arbitrary parking location considered preferred and/or convenient for delivery of the delivered service. The "parking location" may be of arbitrary size and/or shape suitable for the occasion, and may hence refer to any e.g. parking area, parking lot, parking garage, zone or even a specific parking space or parking slot. Additionally or alternatively, the suitable parking location may also include any location where a vehicle user may temporarily stop to receive a delivered service while remaining in his or her vehicle. Furthermore, "based on" is intended to be interpreted in a broad manner, likewise including e.g. derived from, considering, taking into account, depend on and/or utilizing.

Since the parking assigning system moreover provides, for instance by means of a provision unit, assigned parking information comprising the at least first suitable parking location to a vehicle user device associated with the first vehicle, input comprising information of at least one parking proposal for the first vehicle is submitted to the vehicle user device. Thereby, one or several preferred parking locations are provided to the user device, thus suggesting suitable parking locations for the first vehicle. Accordingly, by informing e.g. a user of the vehicle via the vehicle user device of the parking proposals, for instance a day, or a few hours, prior to the planned delivery of the delivered service, he or she may choose to position the first vehicle in accordance therewith. Subsequently, should the first vehicle be driven to and positioned at the at least first suitable parking location, the delivered service may be delivered in an efficient manner, in that the parking location rather than having been selected as by preferred by e.g. the driver of the vehicle, has been selected based on criteria suitable for efficient delivery of delivered services.

According to one example, the first vehicle may be autonomously driven to the at least first suitable parking location, based on the assigned parking information provided to the vehicle user device.

The expression "user of a vehicle" is intended to refer to e.g. a passenger or driver of the vehicle, whereas the expression "user of a delivered service" is intended to refer to a person or entity placing an order for delivery of a delivered service. The "user of a vehicle" and the "user of a delivered service" may presumably, although not necessarily, be the same person.

Moreover, the expression "vehicle user device associated with the first vehicle" is here intended to refer to an electronic device which has an association with the first vehicle; for instance the vehicle user device and the first vehicle may have the same owner or be accountable for by the same person, or the vehicle user device may be considered associated with the first vehicle by being integrated in the first vehicle. Additionally or alternatively, the vehicle user device being associated with the first vehicle may be represented by e.g. a phone number of the vehicle user device, or an email address supported by the vehicle user device, having been provided to the parking assigning system, for instance when placing an order of delivery of a delivered service to the first vehicle. The "vehicle user device" may be represented by any arbitrary electronic device adapted for receiving assigned parking information from the parking assigning system, for instance a mobile terminal or wireless terminal, a mobile phone, a smart phone, a computer such as e.g. a laptop, a Personal Digital Assistant (PDA) or tablet computer, sometimes referred to as a surf plate, with wireless capability, a Machine to Machine (M2M) device or any other radio network unit capable to communicate with the parking assigning system, or for example, a portable, pocket-storable, hand-held, computer-comprised, or vehicle-mounted mobile device.

Moreover, the "providing" is intended to be interpreted in a broad manner, likewise including at least transmitting, sending, submitting, supplying and/or informing. Furthermore, the "assigned parking information", which holds the information of the at least first suitable parking location, may for instance be comprised in a message or signal of a generic or customized format supported in the communication between the parking assigning system and the vehicle user device, e.g. in an SMS or email.

According to an embodiment, the first vehicle condition data may comprise one or a combination of parameters associated with a timing of the delivered service and/or a preferred geographical zone. Thereby, the parking assigning system may establish one or several preferred parking proposals based on time restrictions of when, and/or geographical restrictions of where, the delivery may take place. The preferred geographical zone may hence be narrowed down, resulting in the at least first suitable parking location. The expression "timing of delivered service" may for instance refer to an approximation of one or several dates of potential delivery and/or a potential timeslot of a day of delivery, and may be defined during placement of the order of the delivery of the delivered service. In a similar manner, the expression "preferred geographical zone" may for instance refer to a geographical region suitable for the delivery, for instance a city or county region based on a home address of the user of the delivered service or an address provided by the user of the delivered service, which similarly may be defined during placement of the order of the delivery of the delivered service. The expression "associated with" may likewise refer to, for instance, related to.

According to another embodiment, the parking assigning system may receive, directly or indirectly from a user of a delivered service, first vehicle input data associated with an order for delivery of a delivered service for the first vehicle, which first vehicle condition data is based on the first vehicle input data. Thereby, the first vehicle condition data may be derived from information directly or indirectly inputted by a user of the delivered service, which information comprises data which relate to the placed order of the delivery of the delivered service and/or the delivery thereof. As previously indicated, the "user of the delivered service" may be the same person as the "user of the vehicle". Furthermore, "based on" is, as previously indicated intended to be interpreted to likewise include at least e.g. derived from, considering, taking into account, depending on and/or utilizing.

According to yet another embodiment, the parking assigning system may compare the first vehicle condition data with available parking criteria. Thereby, already available parking preferences considered relevant in establishing parking proposals for the first vehicle, are taken into account in the determining of the at least first suitable parking location. That is, by considering available parking criteria deemed to be of interest for the current determining of the at least first suitable parking location, for instance parking parameters related to other vehicles adapted for receipt of delivered services, and comparing the first vehicle condition data with these, one or several parking proposals, efficient in terms of delivery, may be established. The expression "available parking criteria" may for instance refer to parameters which are predetermined, e.g. stored in a memory comprised in, or accessible from, the parking assigning system. Additionally or alternatively, the available parking criteria, e.g. parameters, may be retrievable or received by the parking assigning system, for instance in, essentially, real time.

According to a further embodiment, the available parking criteria may comprise one or a combination of parameters associated with: timing of parking, parking location conditions, road infrastructure, parking statistics, delivered service statistics, traffic conditions, weather conditions and/or service delivery content. That is, should the available parking criteria comprise parameters related to "timing of parking", time conditions may be taken into consideration in determining the at least first suitable parking location, whereby the parking proposals may vary depending on e.g. time of day, day of the week and/or season. In a similar manner, should the available parking criteria comprise "parking location conditions", parameters may be considered which indicate e.g. how suitable the parking location is considered for delivery of the delivered service. Should the available parking criteria comprise parameters related to "road infrastructure", conditions related to e.g. how easily accessible a parking location is, may be taken into consideration. Moreover, should the available parking criteria comprise parameters related to "parking statistics", statistic data related to previous parking of vehicles in a parking location, and the experience thereof, may be considered in determining the at least first suitable parking location. In a similar manner, should the available parking criteria comprise parameters related to "delivered service statistics", statistic data related to previous deliveries of delivered services may be considered. Furthermore, should the available parking criteria comprise parameters related to "traffic conditions", a current or expected traffic situation may be considered in determining the at least first suitable parking location. In a similar manner, should the available parking criteria comprise parameters related to "weather conditions", a current or expected weather situation may be considered. Moreover, should the available parking criteria comprise parameters related to "service delivery content", consideration may be taken to e.g. what type of delivered service is to be delivered, when determining the at least first suitable parking location.

According to yet a further embodiment, the available parking criteria may comprise an assigned second parking location associated with a second vehicle adapted for receipt of a delivered service, and/or information of an actual second parking position of the second vehicle. Furthermore, the parking assigning system may determine the at least first suitable parking location to be in the vicinity of the assigned second parking location and/or the actual second parking position. Thereby, in the available parking criteria comprising an assigned second parking location associated with a second vehicle adapted for receipt of a delivered service, and/or comprising information of an actual second parking position of the second vehicle, consideration may be taken to another vehicle adapted for delivery of a delivered service, i.e. a vehicle other than the first vehicle. Furthermore, in the parking assigning system determining the at least first suitable parking location to be in vicinity of the assigned second parking location and/or the actual second parking position, the at least first suitable parking location may be established to be close to an assigned parking location and/or an actual parking position of the second vehicle. Thereby, by suggesting the one or several parking proposals for the first vehicle to be near the second vehicle, which second vehicle is adapted for receipt of a delivered service, efficient delivery of delivered services may be even further supported. The at least first suitable parking location may, for instance, be determined to be one or several parking spaces next to, essentially next to, or opposite the actual second parking position and/or an assigned parking space of the second vehicle. Alternatively, the at least first suitable parking location may, for instance, be determined to be represented by the parking area, or a section thereof, associated with the actual second parking position and/or assigned second parking location of the second vehicle. It should be noted that the parking assigning system not necessarily is aware of whether the proposed at least first suitable parking location in fact is available for parking, or e.g. occupied.

According to still a further embodiment, the available parking criteria may further comprise an assigned third parking location associated with a third vehicle adapted for receipt of a delivered service, and/or information of an actual third parking position of the third vehicle. Furthermore, the parking assigning system may determine the at least first suitable parking location to be in vicinity of the assigned second parking location or the actual second parking position, and the assigned third parking location or the actual third parking position. Thereby, in the available parking criteria comprising as well an assigned third parking location associated with a third vehicle adapted for receipt of a delivered service, and/or information of an actual third parking position of the third vehicle, consideration may be taken to yet another vehicle adapted for delivery of a delivered service, i.e. a vehicle other than the first vehicle and the second vehicle. Furthermore, in the parking assigning system determining the at least first suitable parking location to be in vicinity of the assigned second parking location and/or the actual second parking position, and at the same time to be in vicinity of the assigned third parking location and/or the actual third parking position, the at least first suitable parking location may be established to be close to both an assigned second parking location and/or an actual second parking position of the second vehicle and an assigned third parking location and/or an actual third parking position of the third vehicle. Thereby, by suggesting the one or several parking proposals for the first vehicle to be near both the second vehicle and the third vehicle, whereby both vehicles are adapted for receipt of delivered services, efficient delivery of delivered services may be yet further supported. Naturally, assigned parking locations and/or actual parking locations of even further vehicles, such as e.g. a fourth, fifth, sixth etc. vehicle, may be taken into account, in a similar manner, when determining the at least first suitable parking location.

The expressions "assigned second parking location" and "assigned third parking location" are, respectively, intended to refer to a parking location which, prior to determining the at least first suitable parking location, has been determined for the second/third vehicle by the parking assigning system. The expressions "actual second parking position" and "actual third parking position" are, respectively, intended to refer to a parking position, for instance GPS based, which reflects the actual geographic parking position of the second/third vehicle. The actual second parking position may, or may not, correspond with, overlap or be comprised in the assigned second parking location. In a similar manner, the actual third parking position may, or may not, correspond with, overlap or be comprised in the assigned third parking location. Moreover, the expression "in vicinity of" is intended to be interpreted in a broad manner, thus likewise including at least nearby, close to, adjacent, within a radius of, within the same e.g. parking area, and/or even referring to the same parking location. For instance, "close to" may refer to an approximated driving distance, or walking distance, of less than 1-10 minutes, whereas "radius" may refer to a radius of 10, 100 or 1000 meters.

Accordingly, the at least first suitable parking location may, for instance, be determined to be one or several parking spaces positioned between the actual second parking position and/or assigned second parking location of the second vehicle, and the actual third parking position and/or assigned third parking location of the third vehicle. Alternatively, the at least first suitable parking location may be determined to be one or several parking spaces within the same parking area as assigned to the second vehicle or comprising the actual second parking position of the second vehicle, at a section of said parking area being close to the actual third parking position or assigned third parking location of the third vehicle. Moreover, alternatively, the at least first suitable parking location may, for instance, be determined to be the common parking area associated with the actual parking positions and/or assigned parking locations of the second vehicle and third vehicle, or a parking area positioned between the actual parking positions and/or assigned parking locations of the second and third vehicles.

According to an example, the determining of the at least first suitable parking location may further comprise receiving information comprising the actual second parking position, directly or indirectly, from the second vehicle. Additionally or alternatively, the determining of the at least first suitable parking location may further comprise receiving information comprising the actual third parking position, directly or indirectly, from the third vehicle. The "information comprising the actual second position" and/or the "information comprising the actual third position" may for instance be comprised in a message or signal of a generic or customized format supported in the communication between the second/third vehicle and the parking assigning system. Such a communication may, alternatively, take place via an intermediate system adapted to communicate with vehicles and to hold updated positions of the vehicles, for instance a management and/or assisting system, such as e.g. Volvo On Call.

According to a second aspect of embodiments herein, the object is achieved by a parking assigning system for supporting delivery efficiency of delivered services to vehicles adapted for receipt of delivered services. The parking assigning system comprises a condition determining unit adapted for determining first vehicle condition data associated with a first vehicle adapted for receipt of a delivered service. The parking assigning system further comprises a parking determining unit adapted for determining at least a first suitable parking location based on the first vehicle condition data. Moreover, the parking assigning system comprises a provision unit adapted for providing assigned parking information comprising the at least first suitable parking location, to a vehicle user device associated with the first vehicle.

According to an embodiment, the first vehicle condition data may comprise one or a combination of parameters associated with a timing of the delivered service and/or a preferred geographical zone.

According to another embodiment, the condition determining unit may be adapted for receiving, directly or indirectly from a user of a delivered service, first vehicle input data associated with an order for delivery of a delivered service for the first vehicle, which first vehicle condition data is based on the first vehicle input data.

According to yet another embodiment, the parking determining unit may be adapted for comparing the first vehicle condition data with available parking criteria.

According to a further embodiment, the available parking criteria may comprise one or a combination of parameters associated with timing of parking, parking location conditions, road infrastructure, parking statistics, delivered service statistics, traffic conditions, weather conditions, and/or service delivery content.

According to yet a further embodiment, the available parking criteria may comprise an assigned second parking location associated with a second vehicle adapted for receipt of a delivered service, and/or information of an actual second parking position of the second vehicle. Furthermore, the parking determining unit may be adapted for determining the at least first suitable parking location to be in the vicinity of the assigned second parking location and/or the actual second parking position.

According to still a further embodiment, the available parking criteria may further comprise an assigned third parking location associated with a third vehicle adapted for receipt of a delivered service, and/or information of an actual third parking position of the third vehicle. Furthermore, the parking determining unit may be adapted for determining the at least first suitable parking location to be in vicinity of the assigned second parking location or the actual second parking position, and the assigned third parking location or the actual third parking position.

According to an example, the parking determining unit may further be adapted for receiving information comprising the actual second parking position, directly or indirectly, from the second vehicle. Additionally or alternatively, the parking determining unit may further be adapted for receiving information comprising the actual third parking position, directly or indirectly, from the third vehicle.

Similar advantages as those mentioned in the foregoing in relation to the first aspect correspondingly apply to the second aspect, why these advantages are not further discussed.

According to a third aspect of embodiments herein, the object is achieved by a computer program product comprising a computer program containing computer program code means arranged to cause a computer or a processor to execute the steps of a method according to the first aspect discussed in the foregoing, stored on a computer-readable medium or a carrier wave. Once again, similar advantages as those mentioned in the foregoing in relation to the first aspect correspondingly apply to the third aspect, why these advantages are not further discussed.

### BRIEF DESCRIPTION OF THE DRAWINGS

The various aspects of the non-limiting embodiments of the invention, including particular features and advantages, will be readily understood from the following detailed description and the accompanying drawings, in which:
Figure 1 illustrates a schematic overview of exemplifying vehicles adapted for receipt of delivered services and a parking assigning system according to embodiments of the disclosure;
Figure 2 is a schematic block diagram illustrating an exemplifying parking assigning system according to embodiments of the disclosure; and
Figure 3 is a flowchart depicting an exemplifying method performed by a parking assigning system according to embodiments of the disclosure.

### DETAILED DESCRIPTION

The non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to supporting delivery efficiency of delivered services to vehicles adapted for receipt of delivered services, there will be disclosed that a delivery of a delivered service to a vehicle may be delivered in an efficient manner, in that the parking location of the vehicle, for the time of the delivery, rather than being selected by the preferences of the user of the vehicle, may be selected based on criteria suitable for efficient delivery of delivered services.

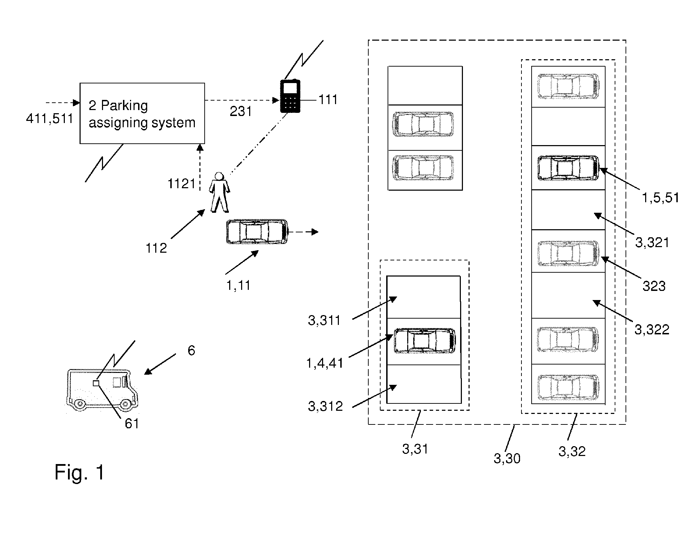

Referring now to the figures and **Figure 1** in particular, there is depicted a schematic overview of exemplifying **vehicles 1** adapted for receipt of delivered services and a **parking assigning system 2,** according to embodiments of the disclosure.

The parking assigning system 2, which will be described in further detail below, is adapted for supporting delivery efficiency of delivered services to the vehicles 1 adapted for receipt of delivered services. The illustrated vehicles 1 adapted for receipt of delivered services are in the shown embodiment passenger cars. One of the depicted vehicles 1 is a first vehicle 11 adapted for receipt of a delivered service. First vehicle input data 1121 is associated with an order for delivery of a delivered service for the first vehicle 11, which order for instance may have been placed over the Internet and may relate to a package delivery. Associated with the first vehicle 11 is a vehicle user device 111, here an exemplifying mobile phone carried by a user 112 of the first vehicle 11.

Depicted in Figure 1 is also assigned parking information 231 comprising at least a first suitable parking location 3 for the first vehicle 11, where the delivery of the delivered service is preferred to take place. The delivery may be carried out by a service provider 6, here a delivery van, which optionally may be adapted to communicate with the parking assigning system 2 by means of a communication unit 61. The delivery may further be carried out in a parking area 30, in which two available parking spaces on the left hand lower side are denoted 311 and 312, two available parking spaces on the right hand side are denoted 321 and 322, and an occupied parking space on the right hand side denoted 323.

Another one of the vehicles 1 adapted for receipt of a delivered service is a second vehicle 4, which is parked in an assigned second parking area 31, which is a subsection on the left hand side of the parking area 30. The second vehicle 4 has an actual second parking position 41. In a similar manner, yet another one of the vehicles 1 adapted for receipt of a delivered service is a third vehicle 5, which is parked in an assigned third parking area 32, which is a subsection on the right hand side of the parking area 30. The third vehicle 5 has an actual third parking position 51. Also depicted is information 411 of the actual second parking position 41 of the second vehicle 4, and information 511 of the actual third parking position 51 of the third vehicle 5, which information 411, 511 may be provided to the parking assigning system 2.

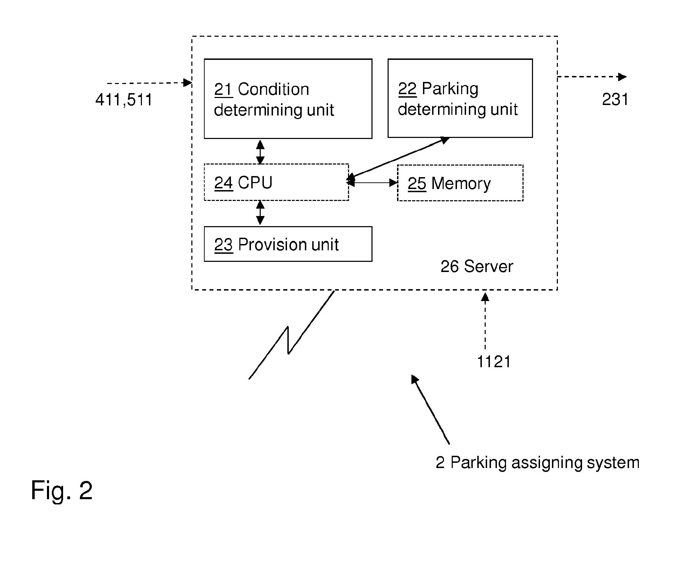

As further shown in Figure 2, which depicts a schematic block diagram illustrating an exemplifying parking assigning system 2 according to embodiments of the disclosure, the parking assigning system 2 is, as previously mentioned, configured for supporting delivery efficiency of delivered services to vehicles 1 adapted for receipt of delivered services. The parking assigning system comprises a **condition determining unit 21, a parking determining unit 22** and a **provision unit 23.** Furthermore, the embodiments herein for supporting delivery efficiency of delivered services to vehicles 1 adapted for receipt of delivered services, may be implemented through one or more processors, such as a **processor 24,** here denoted CPU, together with computer program code for performing the functions and actions of the embodiments herein. Said program code may also be provided as a computer program product, for instance in the form of a data carrier carrying computer program code for performing the embodiments herein when being loaded into the parking assigning system 2. One such carrier may be in the form of a CD ROM disc. It is however feasible with other data carriers such as a memory stick. The computer program code may furthermore be provided as pure program code on a server and downloaded to the parking assigning system 2.

The parking assigning system 2 may further comprise a **memory 25** comprising one or more memory units. The memory 25 may be arranged to be used to store e.g. information, and further to store data, configurations, schedulings, and applications, and for instance temporary position data, to perform the methods herein when being executed in the parking assigning system 2. Furthermore, the condition determining unit 21, the parking determining unit 22, the provision unit 23, the optional processor 24, and the optional memory 25 may for instance be implemented in one or several arbitrary **servers 26,** which may be located at any arbitrary location or locations suitable for the implementation at hand. Those skilled in the art will also appreciate that the condition determining unit 21, the parking determining unit 22, the provision unit 23 described above, which will be described in more detail later on in this description, may refer to a combination of analog and digital circuits, and/or one or more processors configured with software and/or firmware, e.g. stored in a memory such as the memory 25, that when executed by the one or more processors such as the processor 24 perform as will be described in more detail below. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

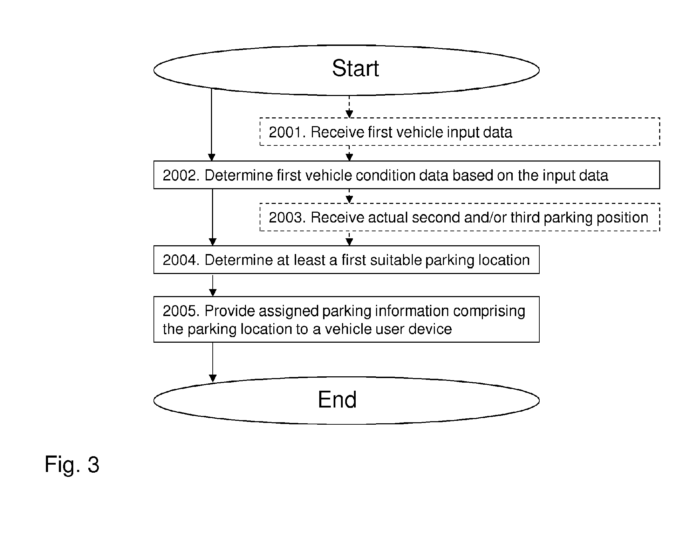

**Figure 3** is a flowchart depicting an exemplifying method performed by a parking assigning system 2 according to embodiments of the disclosure. As previously indicated, the parking assigning system 2 is adapted for supporting delivery efficiency of delivered services to vehicles 1 adapted for receipt of delivered services. The exemplifying method, which may be continuously repeated, comprises the following actions discussed with support from Figures 1 and 2. The actions may be taken in any suitable order, and/or one or more actions may even be performed simultaneously where applicable.

### Action 2001

In optional Action 2001, the parking assigning system 2 may receive, directly or indirectly from the user 112 of the first vehicle 11, for instance by means of the condition determining unit 21, the first vehicle input data 1121 associated with an order for delivery of a delivered service for the first vehicle 11.

### Action 2002

In Action 2002, the parking assigning system 2 determines, by means of the condition determining unit 21, the first vehicle condition data associated with the first vehicle 11 adapted for receipt of a delivered service.

Should Action 2002 of determining the first vehicle condition data follow upon Action 2001 of receiving the first vehicle input data 1121, then the first vehicle condition data may be based on the first vehicle input data 1121.

Optionally, the first vehicle condition data comprises one or a combination of parameters associated with timing of delivered service and/or preferred geographical zone.

### Action 2003

In optional Action 2003, the parking assigning system 2 may receive, for instance by means of the parking determining unit 22, directly or indirectly from the second vehicle 4, the information 411 comprising the actual second parking position 41. Additionally or alternatively, the parking assigning system 2 may receive, for instance by means of the parking determining unit 22, directly or indirectly from the third vehicle 5, the information 511 comprising the actual third parking position 51.

### Action 2004

In Action 2004, the parking assigning system 2 determines, by means of the parking determining unit 22, the at least first suitable parking location 3 based on the first vehicle condition data.

Optionally, the Action 2004 of determining the at least first suitable location 3 may comprise comparing, for instance by means of the parking determining unit 22, the first vehicle condition data with available parking criteria.

The available parking criteria may comprise one or a combination of parameters associated with timing of parking, parking location conditions, road infrastructure, parking statistics, delivered service statistics, traffic conditions, weather conditions and/or service delivery content.

Moreover, optionally, the available parking criteria may comprise the assigned second parking location 31 associated with the second vehicle 4 adapted for receipt of a delivered service. Additionally or alternatively, the available parking criteria may comprise information of the actual second parking position 41 of the second vehicle 4. The Action 2004 of determining the at least first suitable parking location 3 may then comprise determining, for instance by means of the parking determining unit 22, the at least first suitable parking location 30, 31, 311, 312 to be in vicinity of the assigned second parking location 31 and/or the actual second parking position 41. According to the shown embodiment of Figure 1, the parking assigning system 2 may hence determine the at least first parking location 3 to be, for instance, the parking area 30, the assigned second parking location 31, and/or either or both of the parking spaces denoted 311 and 312. Furthermore, if the parking assigning system 2 is not aware of whether or not the proposed at least first parking location 3 is already occupied, the at least first parking location 3 may potentially also include occupied e.g. parking areas, parking locations, or parking spaces.

Furthermore, optionally, the available parking criteria may comprise the assigned third parking location 32 associated with the third vehicle 5 adapted for receipt of a delivered service. Additionally or alternatively, the available parking criteria may comprise information of the actual third parking position 51 of the third vehicle 5. The Action 2004 of determining the at least first suitable parking location 3 may then further comprise determining, for instance by means of the parking determining unit 22, the at least first suitable parking location 311, 321, 322 to be in vicinity of the assigned second parking location 31 or said actual second parking position (41), and, at the same time, be in vicinity of the assigned third parking location 32 or the actual third parking position 51. According to the shown embodiment of Figure 1, the parking assigning system 2 may hence determine the at least first parking location 3 to be, for instance, either or all of the parking spaces denoted 311, 321 and 322. Furthermore, if the parking assigning system 2 is not aware of whether or not the proposed at least first parking location 3 is already occupied, the at least first parking location 3 may also include the parking space denoted 323.

### Action 2005

In Action 2005, the parking assigning system 2 provides, by means of the provision unit 23, the assigned parking information 231 comprising the at least first suitable parking location 3 to the vehicle user device 111 associated with the first vehicle 11.

Consequently, according to the assigning of the at least one suitable parking location 3 described in the foregoing, one or several preferred parking locations 3 are provided to the user device 111, thus suggesting suitable parking locations 3 for the first vehicle 11. Accordingly, by informing e.g. the user 112 of the vehicle 11 via the vehicle user device 111 of the parking proposals 3, he or she may choose to position the first vehicle 11 in accordance therewith. Subsequently, should the first vehicle 11 be driven to and positioned at the at least first suitable parking location 3, the delivered service may be delivered in an efficient manner, in that the parking location 3 rather than having been selected by the preferences of the user 112 of the vehicle, has been selected based on criteria 1121, 411, 511 suitable for efficient delivery of delivered services.

The person skilled in the art realizes that the present disclosure by no means is limited to the preferred embodiments described above. On the contrary, many modifications and variations are possible within the scope of the appended claims. It should furthermore be noted that the drawings have not necessarily been drawn to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a parking assigning system (2) for supporting delivery efficiency of delivered services to vehicles (1) adapted for receipt of delivered services, said method comprising:
*determining* (2002) first vehicle condition data associated with a first vehicle (11) adapted for receipt of a delivered service;
*determining* (2004) at least a first suitable parking location (3) based on said first vehicle condition data; and
*providing* (2005) assigned parking information (231) comprising said at least first suitable parking location (3) to a vehicle user device (111) associated with said first vehicle (11).

2. The method according to claim 1, wherein said first vehicle condition data comprises one or a combination of parameters associated with:
timing of delivered service; and/or
preferred geographical zone.

3. The method according to claim 1 or 2, wherein said *determining* the first vehicle condition data further comprises:
*receiving* (2001), directly or indirectly from a user (112) of a delivered service, first vehicle input data (1121) associated with an order for delivery of a delivered service for said first vehicle (11), wherein said first vehicle condition data is based on said first vehicle input data (1121).

4. The method according to any one of claims 1-3, wherein said *determining* (2004) said at least first parking location (3) comprises comparing said first vehicle condition data with available parking criteria.

5. The method according to claim 4, wherein said available parking criteria comprises one or a combination of parameters associated with:
timing of parking;
parking location conditions;
road infrastructure;
parking statistics;
delivered service statistics;
traffic conditions;
weather conditions; and/or
service delivery content.

6. The method according to claim 4 or 5, wherein said available parking criteria comprises:
an assigned second parking location (31) associated with a second vehicle (4) adapted for receipt of a delivered service; and/or
information (411) of an actual second parking position (41) of said second vehicle (4);
wherein said *determining* (2004) the at least first suitable parking location (3) comprises determining said at least first suitable parking location (30, 31, 311, 312) to be in vicinity of:
said assigned second parking location (31); and/or
said actual second parking position (41).

7. The method according to claim 6, wherein said available parking criteria further comprises:
an assigned third parking location (32) associated with a third vehicle (5) adapted for receipt of a delivered service; and/or
information (511) of an actual third parking position (51) of said third vehicle (5);
wherein said *determining* (2004) the at least first suitable parking location (3) comprises determining said at least first suitable parking location (311, 321, 322) to be in vicinity of:
said assigned second parking location (31) or said actual second parking position (41), and
said assigned third parking location (32) or said actual third parking position (51).

8. A **parking assigning system** (2) for supporting delivery efficiency of delivered services to vehicles (1) adapted for receipt of delivered services, said parking assigning system (2) comprising:
a **condition determining unit** (21) adapted for determining (2002) first vehicle condition data associated with a first vehicle (11) adapted for receipt of a delivered service;
a **parking determining unit** (22) adapted for determining (2004) at least a first suitable parking location (3) based on said first vehicle condition data; and
a **provision unit** (23) adapted for providing (2005) assigned parking information (231) comprising said at least first suitable parking location (3) to a vehicle user device (111) associated with said first vehicle (11).

9. The parking assigning system (2) according to claim 8, wherein said first vehicle condition data comprises one or a combination of parameters associated with:
timing of delivered service; and/or
preferred geographical zone.

10. The parking assigning system (2) according to claim 8 or 9, wherein said condition determining unit (21) further is adapted for:
receiving (2001), directly or indirectly from a user (112) of a delivered service, first vehicle input data (1121) associated with an order for delivery of a delivered service for said first vehicle (11), wherein said first vehicle condition data is based on said first vehicle input data (1121).

11. The parking assigning system (2) according to any one of claims 8-10, wherein said parking determining unit (22) is adapted for comparing said first vehicle condition data with available parking criteria.

12. The parking assigning system (2) according to claim 11, wherein said available parking criteria comprises one or a combination of parameters associated with:
timing of parking;
parking location conditions;
road infrastructure;
parking statistics;
delivered service statistics;
traffic conditions;
weather conditions; and/or
service delivery content.

13. The parking assigning system (2) according to claim 11 or 12, wherein said available parking criteria comprises:
an assigned second parking location (31) associated with a second vehicle (4) adapted for receipt of a delivered service; and/or
an actual second parking position (41) of said second vehicle (4);
wherein said parking determining unit (22) is further adapted for determining (2004) said at least first suitable parking location (30, 31, 311, 312) to be in vicinity of:
said assigned second parking location (31); and/or
said actual second parking position (41).

14. The parking assigning system (2) according to claim 13, wherein said available parking criteria further comprises:
an assigned third parking location (32) associated with a third vehicle (5) adapted for receipt of a delivered service; and/or
an actual third parking position (51) of said third vehicle (5);
wherein said parking determining unit (22) further is adapted for determining said at least first suitable parking location (311, 321, 322) to be in vicinity of:
said assigned second parking location (31) or said actual second parking position (41), and
said assigned third parking location (32) or said actual third parking position (51).

15. Computer program product comprising a computer program containing computer program code means arranged to cause a computer or a processor to execute the steps of a method according to any of claims 1-7, stored on a computer-readable medium or a carrier wave.
